# EUROPÄISCHE PATENTANMELDUNG

(11) **EP 2 752 478 A1**
(43) Veröffentlichungstag der Anmeldung: **09.07.2014**
(21) Anmeldenummer: 13005970.2
(22) Anmeldetag: 20.12.2013
(51) Int. Cl.: C10J 3/32, C10J 3/34

(54) **Vergaservorrichtung**

(30) Priorität: 04.01.2013 AT 62013
(71) Anmelder: Fritsche, Andreas, 6707 Bürserberg (AT)
(72) Erfinder: Fritsche, Andreas, 6707 Bürserberg (AT)
(74) Vertreter: Fechner, Thomas

(57) **Zusammenfassung**

Vergaservorrichtung (1) zur Gewinnung von brennbarem Gas aus Biomasse, wobei die Vergaservorrichtung (1) ein, einen Reaktorhohlraum (2) umschließendes Reaktorgefäß (3) und zumindest eine Einfüllschleuse (4) zum Einfüllen der Biomasse in den Reaktorhohlraum (2) und zumindest einen Gasauslass (5) zur Abfuhr des aus der Biomasse erzeugten brennbaren Gases aus dem Reaktorhohlraum (2) und zumindest einen Gitterrost (6) aufweist, wobei der Gitterrost (6) im Reaktorhohlraum (2) und der Gasauslass (5) auf der, der Einfüllschleuse (4) gegenüberliegenden Seite des Gitterrosts (6) angeordnet ist und die Biomasse innerhalb des Reaktorhohlraums (2) entlang einer Transportrichtung (7) von der Einfüllschleuse (4) zum Gitterrost (6) transportierbar ist und eine bewegbar gelagerte Zuführeinrichtung (8) für Vergasungsmittel im Reaktorhohlraum (2) angeordnet ist, wobei die Zuführeinrichtung (8) mehrere Austrittsöffnungen (9) zum Austritt des Vergasungsmittels in den Reaktorhohlraum (2) aufweist, wobei die Austrittsöffnungen (9) der Zuführeinrichtung (8) in einer Richtung (10) quer zur Transportrichtung (7) bewegbar sind.

## Beschreibung

Die vorliegende Erfindung betrifft eine Vergaservorrichtung zur Gewinnung von brennbarem Gas aus Biomasse, insbesondere aus Holz, wobei die Vergaservorrichtung ein, einen Reaktorhohlraum umschließendes Reaktorgefäß und zumindest eine Einfüllschleuse zum Einfüllen der Biomasse in den Reaktorhohlraum und zumindest einen Gasauslass zur Abfuhr des aus der Biomasse erzeugten brennbaren Gases aus dem Reaktorhohlraum und zumindest einen Gitterrost aufweist, wobei der Gitterrost im Reaktorhohlraum und der Gasauslass auf der, der Einfüllschleuse gegenüberliegenden Seite des Gitterrosts angeordnet ist und die Biomasse innerhalb des Reaktorhohlraums entlang einer Transportrichtung von der Einfüllschleuse zum Gitterrost transportierbar ist und eine bewegbar gelagerte Zuführeinrichtung für Vergasungsmittel im Reaktorhohlraum angeordnet ist, wobei die Zuführeinrichtung mehrere Austrittsöffnungen zum Austritt des Vergasungsmittels in den Reaktorhohlraum aufweist.

Vergaservorrichtungen der genannten Art dienen dazu, aus Biomasse, insbesondere aus Holz, brennbares Gas zu gewinnen, um dies dann z.B. in Verbrennungsmotoren als Treibstoff oder für sonstige Zwecke einzusetzen. Vergaservorrichtungen der genannten Art werden auch häufig als Holzvergaser bezeichnet. Die Biomasse aus der mittels der gattungsgemäßen Vergaservorrichtung brennbares Gas gewonnen werden kann, ist aber nicht nur auf Holz beschränkt.

Eine Vergaservorrichtung der genannten Art ist z.B. in der DE 35 09 341 C1 beschrieben und wird dort als Gleichstromgasgenerator bezeichnet. Um den Vergasungsvorgang zu verbessern, werden dort über die Zuführeinrichtung und deren Austrittsöffnungen Vergasungsmittel der zu vergasenden Biomasse im Reaktorhohlraum zugeführt. Bei den Vergasungsmitteln handelt es sich in der Regel um Luft, Sauerstoff oder andere sauerstoffhaltige Gasmischungen. Die Zuführeinrichtung wird in der DE 35 09 341 C1 in Form eines Zuführungsrohres mit einem Verteilerkopf ausgeführt, der Verteilerkopf ist birnenförmig ausgestaltet und weist die Austrittsöffnungen auf. In der DE 35 09 341 C1 ist die Zuführeinrichtung in Form des Gaszuführungsrohres höhenverstellbar, also in einer Richtung parallel zur Transportrichtung verstellbar, um den Ort der Vergasungsmitteleinleitung in der Höhe möglichst genau und optimal einstellen zu können.

Bei Vergasungseinrichtungen der genannten Art kann es durch Brücken- bzw. Hohlbrände im Bereich der Austrittsöffnungen für das Vergasungsmittel zu Hitzenestern und Verschlackungen kommen.

Aufgabe der Erfindung ist es, eine gattungsgemäße Vergaservorrichtung vorzuschlagen, bei der dieses Problem vermieden wird.

Hierzu ist erfindungsgemäß vorgesehen, dass die Austrittsöffnungen der Zuführeinrichtung in einer Richtung quer, vorzugsweise orthogonal, zur Transportrichtung bewegbar sind. Durch die Bewegbarkeit der Austrittsöffnungen in einer Richtung quer, vorzugsweise orthogonal, zur Transportrichtung, ist es möglich, erfindungsgemäße Vergaservorrichtungen mit einem Verfahren zu betreiben, bei dem die Austrittsöffnungen innerhalb des Reaktorhohlraums während der Gewinnung des brennbaren Gases kontinuierlich oder intermittierend bzw. schrittweise neu positioniert werden. Hierdurch können Hitzenester und Verschlackungen während des Vergasungsprozesses vermieden werden. Bevorzugt ist dabei vorgesehen, dass die Austrittsöffnungen jeweils in einer oder mehreren Ebenen bewegt werden, die schräg ,vorzugsweise orthogonal, zur Transportrichtung liegt bzw. liegen. Schräg sind dabei alle Winkel abweichend von der Parallelität. Bevorzugt werden die Austrittsöffnungen in einem Bereich bewegt, der von Ebenen begrenzt ist, die maximal 45 Grad mit einer Ebene normal bzw. orthogonal zur Transportrichtung einschließen. Besonders bevorzugt erfolgt die Bewegung der Austrittsöffnungen in einer oder mehreren Ebenen die normal bzw. orthogonal zur Transportrichtung steht bzw. stehen.

Der Vollständigkeit halber wird darauf hingewiesen, dass zusätzlich zu der erfindungsgemäßen Möglichkeit der Bewegung der Austrittsöffnung natürlich auch vorgesehen sein kann, dass diese zusätzlich auch in Richtungen parallel zur Transportrichtung bewegbar sind, z.B. um, wie im genannten Stand der Technik, die Höhenlage der Oxidationszone zu verändern.

Die Transportrichtung ist die Richtung, in der die Biomasse bzw. das Holz während des Vergasungsvorgangs mit der Zeit durch den Reaktorhohlraum hindurch transportiert wird. Die Transportrichtung ist daher im Wesentlichen von der Einfüllschleuse zum Gitterrost gerichtet. Sie repräsentiert den Transport der gesamten Biomasse durch den Reaktorhohlraum und wird im Zweifel als Parallele zu den, den Reaktorhohlraum begrenzenden Innenwänden des Reaktorgefäßes gemessen. In der Transportrichtung bewegen sich in erfindungsgemäßen Vergaservorrichtungen auch die erzeugten brennbaren Gase. Sobald sie den Gitterrost erreicht haben, treten sie durch diesen hindurch und werden über den Gasauslass aus dem Reaktorhohlraum abgelassen. Sie können dann, gegebenenfalls nach entsprechender Filterung gemäß des Standes der Technik, als Brenngas weiter verwendet werden.

In erfindungsgemäßen Vergaservorrichtungen bewegt sich somit die Biomasse bzw. das Holz während des Vergasungsprozesses in derselben Transportrichtung wie das dabei entstehende brennbare Gas. Es handelt sich bei erfindungsgemäßen Vergaservorrichtungen also um sogenannte Gleichstromvergaser.

Als Biomasse kommen grundsätzlich alle zur Abgabe von brennbarem Gas geeigneten Biomassematerialien in Frage. Besonders bevorzugt wird die Vergaservorrichtung aber als sogenannter Holzvergaser betrieben, in dem aus Holz das brennbare Gas gewonnen wird. Das Holz kann bevorzugt in Form von Schüttgut, wie z.B. Hackschnitzel, anderweitigen Holzschnitzel, Pellets und dergleichen vorliegen.

Das erzeugte brennbare Gas ist meist ein Gasgemisch, mit Anteilen von brennbaren Gasen aber auch mit Ruß- und Rauchanteilen, welche durch beim Stand der Technik bekannte Filter aber herausfilterbar sein können. Die Einfüllschleuse ist, wie beim Stand der Technik an sich bekannt, so ausgebildet, dass durch sie hindurch Biomasse bzw. Holz in den Reaktorhohlraum eingefüllt werden kann, ohne dass dabei das erzeugte brennbare Gas aus dem Reaktorhohlraum austreten kann.

In einer bevorzugten Betriebsstellung der erfindungsgemäßen Vergaservorrichtung befindet sich die Einfüllschleuse am oberen Ende des Reaktorgefäßes und der Gasauslass entsprechend am gegenüberliegenden unteren Ende des Reaktorgefäßes. Die Transportrichtung verläuft dann in der Regel vertikal von oben nach unten.

Als Vergasungsmittel, welches über die Zuführeinrichtung in den Reaktorhohlraum eingebracht wird, können Luft, Sauerstoff oder sonstige sauerstoffhaltige Gasgemische oder Sauerstoff abgebende Fluide eingesetzt werden. Das Vergasungsmittel fördert jedenfalls die Wärmebildung in der Oxidationszone und damit das Austreten des brennbaren Gases aus der Biomasse bzw. dem Holz.

Bei bevorzugten Ausgestaltungsformen der Erfindung ist vorgesehen, dass die Austrittsöffnungen der Zuführeinrichtung drehbar im Reaktorhohlraum gelagert sind. Besonders bevorzugt lassen sie sich im Betrieb kontinuierlich oder intermittierend um eine gemeinsame Drehachse drehen. Die Drehung erfolgt in einer Richtung quer, vorzugsweise orthogonal, zur Transportrichtung. Man könnte in diesem Fall auch von einer tangentialen Bewegung sprechen. Besonders bevorzugt ist dabei vorgesehen, dass die Austrittsöffnung, in radialer Richtung von der Drehachse aus gesehen, zumindest teilweise voneinander verschiedene Abstände zur Drehachse aufweisen.

Günstig ist es auch, wenn die Austrittsöffnungen für das Vergasungsmittel in einer Richtung parallel zur Transportrichtung gesehen, vom Gitterrost beabstandet angeordnet sind. In einer bevorzugten Betriebsstellung befinden sich die Austrittsöffnungen beabstandet vom Gitterrost und oberhalb des Gitterrosts.

Die Austrittsöffnungen können an einem oder mehreren länglichen Armen der Zuführeinrichtung voneinander beabstandet angebracht sein. Vorzugweise sind diese Arme rohrförmig ausgebildet. Die Zuführeinrichtung kann mehrere Arme aufweisen. Diese können sternförmig angeordnet sein. Bevorzugte Ausgestaltungsformen sehen vor, dass die Zuführeinrichtung eine Tragstange aufweist, welche parallel zur Transportrichtung angeordnet ist und die Austrittsöffnungen trägt. Bei den Ausgestaltungsformen mit den Armen trägt die Tragstange dann eben diese Arme, in denen die Austrittsöffnungen angeordnet sind. Die Tragstange reicht in bevorzugten Ausgestaltungsformen von der Seite, auf der sich auch der Gasauslass befindet, kommend in den Reaktorhohlraum hinein. Bezugnehmend auf die oben genannte bevorzugte Betriebsstellung ist die Tragstange somit bevorzugt von unten kommend und in den Reaktorhohlraum hineinreichend angeordnet. Die Tragstange kann koaxial zu der bereits genannten gemeinsamen Drehachse, um welche die Austrittsöffnungen der Zuführeinrichtung drehbar gelagert sind, angeordnet sein. Zusätzlich kann die Tragstange auch um diese gemeinsame Drehachse drehbar sein. Ein Drehantrieb für die Tragstange ist günstigerweise außerhalb des Reaktorgefäßes bzw. zumindest außerhalb des Reaktorhohlraums angeordnet. Der Drehantrieb selbst kann in allen, beim Stand der Technik bekannten Ausgestaltungsformen ausgeführt sein. Die Tragstange kann auch eine Leitung für die Zufuhr von Vergasungsmittel zu den Austrittsöffnungen aufweisen. Sie dient dann in bevorzugten Ausgestaltungsformen sowohl als Träger der Austrittsöffnungen und/oder der Arme bzw. des Armes sowie auch als ein Übertragungsmittel für die Bewegung, insbesondere Drehbewegung, und zusätzlich noch als ein Leitungssystem, durch das hindurch das Vergasungsmittel zu den Austrittsöffnungen geführt werden kann.

Bevorzugte Ausgestaltungsformen erfindungsgemäßer Vergaservorrichtungen sehen vor, dass der Gitterrost um eine Drehachse drehbar ist. Vorzugsweise erfolgt die Drehung des Gitterrosts gemeinsam mit der Drehung der Austrittsöffnungen.

Dies kann z.B. dadurch realisiert sein, dass der Gitterrost drehfest mit der Zuführeinrichtung, vorzugsweise mit besagter Tragstange, verbunden ist und so auch mittels der Zuführeinrichtung bzw. der Tragstange gedreht wird.

Um die Zuführeinrichtung bei ihrer Drehbewegung im Reaktorhohlraum und der damit verbundenen Drehbewegung der Biomasse bzw. des Holzes zu unterstützen, sehen bevorzugte Ausgestaltungsformen vor, dass im Reaktorhohlraum in einem Bereich zwischen den Austrittsöffnungen und der Einfüllschleuse zusätzlich ein Rührwerk zum Umrühren der Biomasse bzw. des Holzes im Reaktorhohlraum angeordnet ist.

Es wird aber auch darauf hingewiesen, dass die Austrittsöffnungen nicht zwingend drehbar um die bevorzugt parallel zur Transportrichtung ausgerichtete Drehachse sein müssen. Das erfindungsgemäße Bewegen der Austrittsöffnungen in einer Richtung quer, vorzugsweise orthogonal, zur Transportrichtung kann auch durch ein Hin- und Herschieben der Austrittsöffnungen bzw. der Zuführeinrichtung in besagter Richtung quer, vorzugsweise orthogonal, zur Transportrichtung erfolgen. In diesem Fall werden die Austrittsöffnungen dann in der Regel auf linearen Bewegungsbahnen hin und her geführt. Natürlich sind auch Überlagerungen von Dreh- und Schiebe- bzw. Ziehbewegungen denkbar, um besagte Hitzenester und Verschlackungen in der Oxidationszone bzw. im Reaktorhohlraum zu vermeiden.

Die Biomasse kann grundsätzlich innerhalb aber auch außerhalb des Reaktorhohlraums angezündet werden. Entsprechende Zündelemente zum Anzünden der Biomasse können im Reaktorhohlraum an unterschiedlichen Stellen angeordnet sein. Bevorzugte Ausgestaltungsformen der Erfindung sehen jedoch vor, dass an der Zuführeinrichtung zumindest ein Zündelement zum Anzünden der Biomasse angeordnet ist. Günstigerweise sind an der Zuführeinrichtung mehrere Zündelemente zum Anzünden der Biomasse angeordnet. Besonders bevorzugt ist vorgesehen, dass das Zündelement bzw. die Zündelemente, vorzugsweise von der Zuführeinrichtung, in einer Richtung quer, vorzugsweise orthogonal, zur Transportrichtung bewegbar ist bzw. sind. Hierdurch kann eine relativ vollflächige Zündung der Biomasse mit nur einem oder zumindest relativ wenigen Zündelementen besonders gut erreicht werden. Besonders günstig ist es, wenn das Zündelement bzw. die Zündelemente zwischen zueinander benachbarten Austrittsöffnungen der Zuführeinrichtung angeordnet ist bzw. sind. Durch die benachbarte Anordnung von Zündelement und Austrittsöffnung wird das Vergasungsmittel in unmittelbarer Nähe zu einem Bereich eingeleitet, indem die Biomasse vom Zündelement angezündet wird. Weist die Zuführeinrichtung einen oder mehrere Arme auf, so können die Zündelemente an den Armen angeordnet sein. Ist die Zuführeinrichtung drehbar, so ist es günstig, mehrere der Zündelemente mit voneinander verschiedenem Abständen von der Drehachse entfernt an der Zuführeinrichtung anzuordnen. Als Zündelemente kommen z.B. Gasbrenner oder Glühkerzen oder dergleichen in Frage. Bevorzugt werden die Zündelemente elektrisch betrieben. Insbesondere die elektrische Zuleitung für die Zündelemente kann in die Zuführeinrichtung integriert sein. Im Falle einer drehbaren Zuführeinrichtung kann die Ankopplung an eine entsprechende externe, nicht mitdrehende Stromquelle über einen an sich bekannten Schleifkontakt oder dergleichen erfolgen.

In der nachfolgenden Figurenbeschreibung werden beispielhaft bevorzugte Ausgestaltungsmerkmale eines erfindungsgemäßen Ausführungsbeispiels einer Vergaservorrichtung und einer Variante hierzu erläutert. Es zeigen:
Fig. 1 einen schematisierten Längsschnitt durch das Ausführungsbeispiel einer erfindungsgemäßen Vergaservorrichtung;
Fig. 2 einen Horizontalschnitt entlang der Schnittlinie AA aus Fig. 1 und
Fig. 3 einen Horizontalschnitt durch eine Variante dieses Ausführungsbeispiels.

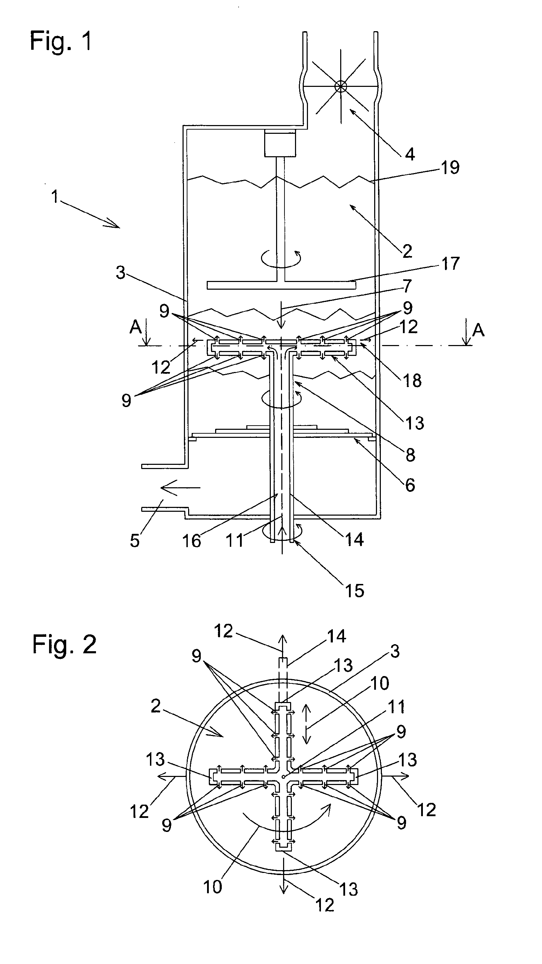

Fig. 1 zeigt einen Längs- bzw. Vertikalschnitt durch die erfindungsgemäße Vergaservorrichtung 1 in einer schematisierten Darstellung. Innerhalb des Reaktorgefäßes 3 befindet sich der Reaktorhohlraum 2, in dem die Biomasse, also bevorzugt das Holz in Form von Hackschnitzeln, Pellets oder anderweitigem Schüttgut vergast wird. Durch die Einfüllschleuse 4 wird das zu vergasende Holz bzw. die zu vergasende Biomasse in den Reaktorhohlraum 2 eingefüllt. Die Einfüllschleuse 4 verhindert aber auch den Gasaustritt aus dem Reaktorhohlraum 2 durch sie hindurch. Geeignete Schleusensysteme sind beim Stand der Technik bekannt. Beispielhaft gezeigt ist hier eine Einfüllschleuse 4 in Form eines drehbaren Schaufelrades, dessen Schaufeln für die entsprechende Abdichtung sorgen. Der Füllstand der Biomasse bzw. des Holzes ist in Fig. 1 schematisiert durch die momentane Füllhöhe 19 dargestellt. Die Biomasse bzw. das Holz liegt auf dem Gitterrost 6 auf. Der Gasauslass 5, durch den hindurch das erzeugte brennbare Gas aus dem Reaktorhohlraum 2 entnommen wird, befindet sich auf der, der Einfüllschleuse 4 gegenüberliegenden Seite des Gitterrosts 6. In der hier dargestellten bevorzugten Betriebsstellung befindet sich die Einfüllschleuse 4 am oberen Ende des Reaktorhohlraums 2 und der Gasauslass 5 am unteren Ende. Es handelt sich um einen sogenannten Gleichstromgaserzeuger, bei dem die zu vergasende Biomasse bzw. das zu vergasende Holz in derselben Transportrichtung 7 durch den Reaktorhohlraum 2 hindurchtransportiert wird, wie das beim Vergasungsvorgang entstehende brennbare Gas. Die verbrannte bzw. verbrauchte Biomasse gelangt mit dem brennbaren Gas durch den Gitterrost 6 und den Gasauslass 5 nach außen. Eine hier nicht dargestellte Öffnung im Reaktorgefäß 3 z.B. in Form eines abnehmbaren Deckels kann für das Anzünden und/oder für Servicezwecke vorhanden sein. Dies ist beim Stand der Technik an sich bekannt und hier nicht noch einmal gesondert dargestellt.

Um die für den Ausgasungsprozess benötigte Wärme im Reaktorhohlraum 2, bevorzugt in der Oxidationszone 18 zur Verfügung zu stellen, wird das Vergasungsmittel über die Zuführeinrichtung 8 und insbesondere über die Austrittsöffnungen 9 in die Oxidationszone 18 eingeleitet. Als Vergasungsmittel kann z.B. Luft, Sauerstoff oder ein anderes sauerstoffhaltiges Gasgemisch oder sonstiges Sauerstoff abgebendes Fluid verwendet werden. Der Eintritt des Vergasungsmittels in den Reaktorhohlraum 2 erfolgt über die Austrittsöffnungen 9. Die Zuführeinrichtung 8 weist bevorzugt, wie hier auch realisiert, eine Vielzahl von Austrittsöffnungen 9 auf, die flächig bzw. räumlich, bevorzugt in der Oxidationszone 18, verteilt und insbesondere in radialer Richtung 12 von der Drehachse 11 aus gesehen, voneinander beabstandet angeordnet sind.

Im gezeigten Ausführungsbeispiel gemäß der Fig. 1 und 2 weist die Zuführeinrichtung 8 die mittels eines hier nicht näher dargestellten, aber beim Stand der Technik an sich bekannten Drehantriebs um die Drehachse 11 drehbare Tragstange 14 auf. An der Tragstange 14 sind die Arme 13 befestigt. In den Armen 13 befinden sich wiederum die Austrittsöffnungen 9. Es können sich auch Austrittsöffnungen 9 direkt in der Tragstange 14 z.B. im Bereich der Arme 13 befinden. Die Zufuhr des Vergasungsmittels erfolgt durch die in der Tragstange 14 angeordnete Leitung 16 hin zu den Austrittsöffnungen 9. Durch die Austrittsöffnungen 9 hindurch tritt das Vergasungsmittel in die Oxidationszone 18 ein. Durch Drehen der Zuführeinrichtung 8 um die Drehachse 11, welche bevorzugt parallel zur Transportrichtung 7 angeordnet ist, werden auch die Austrittsöffnungen 9 der hier als Rohre ausgebildeten Arme 13 in der Richtung 10 quer bzw. orthogonal zur Transportrichtung 7 bewegt. Dies verhindert, dass es in den Punkten, in denen das Vergasungsmittel aus den Austrittsöffnungen 9 austritt, zu Verschlackungen bzw. Hitzenestern kommt. Das Drehen der Zuführeinrichtung 8 und gegebenenfalls auch des Gitterrosts 6 kann relativ langsam erfolgen, z.B. mit 10° pro Minute. Mit dem hier realisierten Rührwerk 17 kann für eine gleichmäßige Bedeckung der Zuführeinrichtung 8 bzw. der Austrittsöffnungen 9 mit Biomasse bzw. Holz gesorgt werden. Die Drehrichtung des Rührwerks 17 spielt dabei keine bzw. eine untergeordnete Rolle. Die Drehgeschwindigkeit des Rührwerks 17 kann höher als die der Zuführeinrichtung 8 sein und z.B. bei 2 Umdrehungen pro Minute liegen. In einer bevorzugten Ausgestaltungsform kann über das zum Drehen des Rührwerks 17 erforderliche Drehmoment die momentane Füllhöhe 19 bestimmt werden, was zur Regelung der Zufuhr an Biomasse in den Reaktorhohlraum 2 herangezogen werden kann.

Bevorzugt wird auch der Gitterrost 6 gedreht. Besonders bevorzugt erfolgt diese Drehung gemeinsam mit der Drehung der Zuführeinrichtung 8. Dies kann z.B. erreicht werden, indem der Gitterrost 6 drehfest mit der Zuführeinrichtung 8 bzw. deren Tragstange 14 verbunden ist. Hierdurch wird auch der Gitterrost 6 mit den Armen 13 und damit mit den Austrittsöffnungen 9 mitgedreht.

Gut zu sehen ist in Fig. 1 auch, dass die Austrittsöffnungen 9 für das Vergasungsmittel in einer Richtung parallel zur Transportrichtung 7 vom Gitterrost 6 beabstandet sind. Hierdurch wird erreicht, dass das Vergasungsmittel nicht in das sich in der Nähe des Gasauslasses 5 sammelnde, bereits erzeugte brennbare Gas sondern in die Oxidationszone 18, welche vom Gitterrost 6 beabstandet sein sollte, eingeblasen wird.

Fig. 2 zeigt einen Horizontalschnitt entlang der Schnittlinie AA aus Fig. 1 durch die Arme 13 der Zuführeinrichtung 8. Gut zu sehen ist hier zum einen die sternförmige Anordnung der Arme 13 wie auch deren bevorzugte Ausbildung als Rohre, sodass durch sie hindurch das Vergasungsmittel den Austrittsöffnungen 9 zugeführt wird. In Fig. 2 ist wie auch in Fig. 1 gut zu sehen, dass die Austrittsöffnungen 9 zumindest teilweise einen unterschiedlichen Abstand in radialer Richtung 12 von der Drehachse 11 aufweisen.

Bei diesem Ausführungsbeispiel erfolgt die erfindungsgemäße Bewegung der Austrittsöffnungen 9 in Richtungen 10 quer zur Transportrichtung 7 auf kreisförmigen Bahnen in Ebenen, die orthogonal bzw. normal zur Transportrichtung 7 stehen. Dies muss nicht zwingend so sein. Abweichend hiervon können die Austrittsöffnungen 9 auch in einer linearen Richtung 10 quer zur Transportrichtung 7 hin und her geschoben werden. Diese Richtung 10 ist in Fig. 2 gestrichelt dargestellt. Um diese Art der linearen Bewegung in Richtung 10, wie sie gestrichelt dargestellt ist, zu ermöglichen, kann die Tragstange 14 z.B. nicht wie in Fig. 1 dargestellt, sondern wie in Fig. 2 gestrichelt angedeutet, seitlich durch die Wandung des Reaktorgefäßes 3 hindurchgeführt werden. Die Tragstange 14 führt dann nicht eine Drehbewegung aus, sondern wird eben zusammen mit den Armen 13 und damit den Austrittsöffnungen 9 entlang der gestrichelt dargestellten Richtung 10 quer zur Transportrichtung 7 bewegt. Auch in diesen Ausführungsbeispielen ist bevorzugt vorgesehen, dass es sich bei der Tragstange 14 um eine solche handelt, welche eine Leitung 16 für die Zufuhr des Vergasungsmittels zu den Austrittsöffnungen 9 aufweist. Auch bei diesen Ausgestaltungsformen kann die Tragstange 14 also als ein entsprechendes Rohr ausgebildet sein.

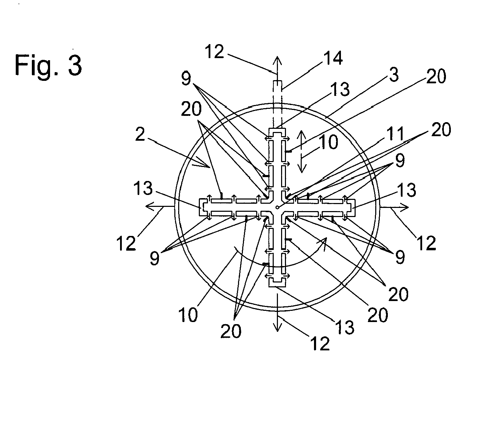

In Fig. 3 ist eine Variante des ersten Ausführungsbeispiels der Erfindung gezeigt, bei der an der Zuführeinrichtung 8, hier konkret an deren Armen 13, mehrere Zündelemente 20 zum Anzünden der Biomasse angeordnet sind. Die Zündelemente 20 sind zwischen jeweils miteinander benachbarten Austrittsöffnungen 9 der Zuführeinrichtung 8 angeordnet. Sie können zusammen mit der Zuführeinrichtung 8 in einer Richtung 10 quer, vorzugsweise orthogonal, zur Transportrichtung 7 bewegt werden. In bevorzugten Ausgestaltungen wie den hier gezeigten, sind die Zündelemente 20 in radialer Richtung 12 unterschiedlich weit von der Drehachse 11 entfernt. Die Anzahl und Position der Zündelemente ist hier in Fig. 3 nur beispielhaft eingezeichnet und kann natürlich variiert werden.

Als Zündelemente 20 kommen z.B. an sich bekannte Glühkerzen, Glühdrähte oder dergleichen in Frage. Es sind aber auch Gasbrenner oder dergleichen denkbar. Günstigerweise sind die Zündelemente 20 elektrisch betrieben. Die Strom- bzw. Spannungszufuhr oder evtl. auch die Gaszufuhr erfolgt bevorzugt über die Zuführeinrichtung 8. So können z.B. entsprechende Zu- und Abführleitungen bzw. - kabel in den Armen 13 und in bzw. an der Tragstange 14 angeordnet sein, z.B. um so aus dem Reaktorgefäß 3 herausgeführt bzw. in dieses hereingeführt zu werden. Bei bevorzugten drehbaren Zuführeinrichtungen 8, wie den hier gezeigten, kann die Ankopplung an eine externe Strom- bzw. Spannungsquelle, wie an sich bekannt, über entsprechende Schleifringe, z.B. an der Tragstange 14 realisiert werden. Die Tragstange 14 und die Arme 13 können selbst auch als elektrische Leitungen, z. B. als Masse verwendet werden. Dann muss zu jedem elektrisch betriebenen Zündelement 20 nur noch ein Kabel in oder an den Armen 13 bzw. der Tragstange 14 und allgemein gesprochen an der Zuführeinrichtung 8 vorgesehen werden.

### Legende

### zu den Hinweisziffern:

- 1: Vergaservorrichtung
- 2: Reaktorhohlraum
- 3: Reaktorgefäß
- 4: Einfüllschleuse
- 5: Gasauslass
- 6: Gitterrost
- 7: Transportrichtung
- 8: Zuführeinrichtung
- 9: Austrittsöffnung
- 10: Richtung quer
- 11: Drehachse
- 12: radiale Richtung
- 13: Arm
- 14: Tragstange
- 15: Drehantrieb
- 16: Leitung
- 17: Rührwerk
- 18: Oxidationszone
- 19: momentane Füllhöhe
- 20: Zündelement

## Patentansprüche

1. Vergaservorrichtung (1) zur Gewinnung von brennbarem Gas aus Biomasse, insbesondere aus Holz, wobei die Vergaservorrichtung (1) ein, einen Reaktorhohlraum (2) umschließendes Reaktorgefäß (3) und zumindest eine Einfüllschleuse (4) zum Einfüllen der Biomasse in den Reaktorhohlraum (2) und zumindest einen Gasauslass (5) zur Abfuhr des aus der Biomasse erzeugten brennbaren Gases aus dem Reaktorhohlraum (2) und zumindest einen Gitterrost (6) aufweist, wobei der Gitterrost (6) im Reaktorhohlraum (2) und der Gasauslass (5) auf der, der Einfüllschleuse (4) gegenüberliegenden Seite des Gitterrosts (6) angeordnet ist und die Biomasse innerhalb des Reaktorhohlraums (2) entlang einer Transportrichtung (7) von der Einfüllschleuse (4) zum Gitterrost (6) transportierbar ist und eine bewegbar gelagerte Zuführeinrichtung (8) für Vergasungsmittel im Reaktorhohlraum (2) angeordnet ist, wobei die Zuführeinrichtung (8) mehrere Austrittsöffnungen (9) zum Austritt des Vergasungsmittels in den Reaktorhohlraum (2) aufweist, **dadurch gekennzeichnet, dass** die Austrittsöffnungen (9) der Zuführeinrichtung (8) in einer Richtung (10) quer, vorzugsweise orthogonal, zur Transportrichtung (7) bewegbar sind.

2. Vergaservorrichtung (1) nach Anspruch 1, **dadurch gekennzeichnet, dass** die Austrittsöffnungen (9) der Zuführeinrichtung (8), vorzugsweise um eine gemeinsame Drehachse (11), drehbar gelagert sind.

3. Vergaservorrichtung (1) nach Anspruch 2, **dadurch gekennzeichnet, dass** die Austrittsöffnungen (9), in radialer Richtung (12) von der Drehachse (11) aus gesehen, zumindest teilweise voneinander verschiedene Abstände zur Drehachse (11) aufweisen.

4. Vergaservorrichtung (1) nach einem der Ansprüche 1 bis 3, **dadurch gekennzeichnet, dass** die Austrittsöffnungen (9), parallel zur Transportrichtung (7) gesehen, vom Gitterrost (6) beabstandet angeordnet sind.

5. Vergaservorrichtung (1) nach einem der Ansprüche 1 bis 4, **dadurch gekennzeichnet, dass** die Austrittsöffnungen (9) an einem oder mehreren länglichen, vorzugsweise rohrförmigen, Armen (13) der Zuführeinrichtung (8) voneinander beabstandet angebracht sind, wobei vorzugsweise vorgesehen ist, dass die Zuführeinrichtung (8) mehrere Arme (13) aufweist und diese sternförmig angeordnet sind.

6. Vergaservorrichtung (1) nach einem der Ansprüche 1 bis 5, **dadurch gekennzeichnet, dass** die Zuführeinrichtung (8) eine Tragstange (14) aufweist, welche parallel zur Transportrichtung (7) angeordnet ist und die Austrittsöffnungen (9) trägt.

7. Vergaservorrichtung (1) nach Anspruch 6, **dadurch gekennzeichnet, dass** die Tragstange (14) koaxial zu der bzw. einer gemeinsamen Drehachse (11), um welche die Austrittsöffnungen (9) der Zuführeinrichtung (8) drehbar gelagert sind, angeordnet und/oder um diese drehbar ist.

8. Vergaservorrichtung (1) nach Anspruch 6 oder 7, **dadurch gekennzeichnet, dass** die Tragstange (14) von einem, vorzugsweise außerhalb des Reaktorhohlraums (2) angeordneten, Drehantrieb (15) drehbar ist und/oder eine Leitung (16) für die Zufuhr von Vergasungsmittel zu den Austrittsöffnungen (9) aufweist.

9. Vergaservorrichtung (1) nach einem der Ansprüche 1 bis 8, **dadurch gekennzeichnet, dass** der Gitterrost (6), vorzugsweise gemeinsam mit den Austrittsöffnungen (9), um eine Drehachse (11) drehbar ist.

10. Vergaservorrichtung (1) nach einem der Ansprüche 1 bis 9, **dadurch gekennzeichnet, dass** im Reaktorhohlraum (2) in einem Bereich zwischen den Austrittsöffnungen (9) und der Einfüllschleuse (4) zusätzlich ein Rührwerk (17) zum Umrühren der Biomasse im Reaktorhohlraum (2) angeordnet ist.

11. Vergaservorrichtung (1) nach einem der Ansprüche 1 bis 10, **dadurch gekennzeichnet, dass** an der Zuführeinrichtung (8) zumindest ein Zündelement (20) zum Anzünden der Biomasse angeordnet ist.

12. Vergaservorrichtung (1) nach Anspruch 11, **dadurch gekennzeichnet, dass** das Zündelement (20), vorzugsweise von der Zuführeinrichtung (8), in einer Richtung (10) quer, vorzugsweise orthogonal, zur Transportrichtung (7) bewegbar ist.

13. Vergaservorrichtung (1) nach Anspruch 11 oder 12, **dadurch gekennzeichnet, dass** das Zündelement (20) zwischen zueinander benachbarten Austrittsöffnungen (9) der Zuführeinrichtung (8) angeordnet ist.

14. Vergaservorrichtung (1) nach einem der Ansprüche 11 bis 13, **dadurch gekennzeichnet, dass** das Zündelement (20) eine Glühkerze und/oder elektrisch betrieben ist.
